(19) Europäisches Patentamt
European Patent Office
Office européen des brevets

(11) **EP 3 347 252 B1**

(12) **FASCICULE DE BREVET EUROPEEN**

(45) Date de publication et mention de la délivrance du brevet:
**23.03.2022 Bulletin 2022/12**

(21) Numéro de dépôt: **16770054.1**

(22) Date de dépôt: **24.08.2016**

(51) Classification Internationale des Brevets (IPC):
***B60W 50/00*** *(2006.01)*   ***B60W 20/12*** *(2016.01)*
***B60W 20/20*** *(2016.01)*

(52) Classification Coopérative des Brevets (CPC):
**B60W 50/0097; B60W 10/06; B60W 10/08;**
**B60W 20/12; B60W 20/20; B60W 50/06;**
B60W 20/00; B60W 2520/10; B60W 2540/20;
B60W 2552/20; B60W 2552/30; B60W 2556/50;
Y02T 10/62

(86) Numéro de dépôt international:
**PCT/FR2016/052112**

(87) Numéro de publication internationale:
**WO 2017/042447 (16.03.2017 Gazette 2017/11)**

(54) **PROCEDE DE GESTION DE L'ENERGIE DANS UN VEHICULE AUTOMOBILE HYBRIDE**

VERFAHREN ZUR ENERGIEVERWALTUNG IN EINEM HYBRIDKRAFTFAHRZEUG

METHOD FOR ENERGY MANAGEMENT IN A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2015 FR 1558296**

(43) Date de publication de la demande:
**18.07.2018 Bulletin 2018/29**

(73) Titulaire: **Renault s.a.s**
**92100 Boulogne Billancourt (FR)**

(72) Inventeurs:
• **MIRO-PADOVANI, Thomas**
**78310 Maurepas (FR)**
• **OURABAH, Abdel-Djalil**
**75013 Paris (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A2- 2 857 271       WO-A1-2015/110129**
**DE-B3-102013 224 349   FR-A1- 2 935 123**

**Description**

DOMAINE TECHNIQUE AUQUEL SE RAPPORTE L'INVENTION

La présente invention concerne un procédé de gestion de l'énergie dans un véhicule automobile hybride comprenant un groupe motopropulseur comportant un moteur thermique et un moteur électrique adaptés à être couplés à des roues du véhicule par un dispositif de transmission selon au moins deux modes de transmission, dont l'un est en cours d'utilisation, selon lequel

a) on détermine une grandeur énergétique représentative de la consommation énergétique du groupe motopropulseur, et
b) on sélectionne l'un desdits modes de transmission, en fonction de cette grandeur énergétique.

ARRIERE-PLAN TECHNOLOGIQUE

Dans un véhicule automobile hybride, le groupe motopropulseur est équipé d'un moteur thermique et d'au moins un moteur électrique, si bien que plusieurs modes de transmission distincts peuvent être mis en œuvre par un dispositif de transmission de ce groupe motopropulseur, pour coupler un ou plusieurs de ces moteurs aux roues motrices du véhicule.

Tout d'abord, on peut choisir de coupler seulement l'un de ces deux moteurs, ou les deux moteurs, aux roues motrices du véhicule, et cela avec, pour chacun de ces moteurs, un rapport de démultiplication qui lui est propre.

Dans un mode de transmission hybride, par exemple, le moteur thermique aussi bien que le moteur électrique sont couplés aux roues motrices du véhicule. Dans un tel mode de transmission hybride, le moteur thermique et le moteur électrique peuvent ainsi participer tous deux à la propulsion du véhicule, notamment lorsqu'un couple important doit être exercé au niveau des roues du véhicule. Le moteur thermique peut aussi, dans un tel mode de transmission hybride, assurer seul cette propulsion, tandis que le moteur électrique reste couplé aux roues motrices pour recharger la batterie électrique destinée à l'alimenter.

En revanche, dans un mode de transmission correspondant à un fonctionnement tout électrique, seul le moteur électrique est couplé aux roues motrices du véhicule. Ce mode de transmission tout électrique est notamment intéressant en phase de freinage. En effet, dans ce cas, l'énergie cinétique du véhicule peut être récupérée au moins partiellement sous forme électrique par l'intermédiaire du moteur électrique, tandis que le moteur thermique est découplé des roues du véhicule et ne consomme pas d'énergie.

D'autre part, lorsque le moteur thermique et le moteur électrique sont couplés tous deux aux roues motrices du véhicule, le couple à produire pour répondre à la demande de couple du conducteur peut être réparti, dans des proportions variables, entre ces deux moteurs.

Parmi les différents modes de transmission qui peuvent ainsi être utilisés, le mode de transmission à mettre en œuvre est en général sélectionné, en fonction des conditions de fonctionnement du véhicule, de manière à minimiser avantageusement la consommation énergétique de ce véhicule.

Mais une telle sélection du mode de transmission, basée seulement sur une minimisation de la consommation énergétique, peut entrainer des changements de mode de transmission particulièrement fréquents, ce qui est désagréable pour les usagers du véhicule et ne s'accompagne pas d'une réduction substantielle de la consommation énergétique du véhicule.

Afin de résoudre ce problème, il est connu notamment du document FR3014062 un procédé de gestion de l'énergie dans un véhicule automobile hybride, dans lequel le mode de transmission à mettre en œuvre est choisi de manière à minimiser une grandeur énergétique mixte, somme d'une grandeur énergétique représentative de la consommation énergétique du véhicule, et d'une grandeur de désagrément prenant en compte le désagrément d'un changement de mode de transmission pour les usagers du véhicule, ce qui permet de limiter la fréquence de tels changements de mode de transmission.

Mais, lorsqu'un tel procédé de gestion est utilisé, des changements inopportuns de mode de transmission peuvent persister, notamment des séquences rapides de changement de mode de transmission au cours desquelles le véhicule change de mode de transmission pendant une durée très brève, ce qui ne s'accompagne pas d'un gain énergétique substantiel.

Le document FR 2 935 123 divulgue un système 10 et un procédé de commande d'un groupe motopropulseur hybride pour véhicule automobile tenant compte des conditions der roulage (trafic, pente) à venir.

OBJET DE L'INVENTION

Afin de remédier à l'inconvénient précité de l'état de la technique, la présente invention propose un nouveau procédé de gestion de l'énergie dans un véhicule automobile hybride, permettant de limiter efficacement les changements de mode de transmission rapprochés dans le temps.

Plus précisément, l'invention propose un procédé de gestion de l'énergie dans un véhicule automobile hybride tel que défini en introduction, selon lequel, à l'étape b),

b1) on détermine un paramètre représentatif d'un changement imminent de demande de couple au niveau des roues,
b2) on détermine un facteur correctif de ladite grandeur énergétique, en fonction du mode de transmission en cours d'utilisation et dudit paramètre représentatif d'un changement imminent de demande de couple,
b3) on détermine une grandeur énergétique corrigée égale à la somme de ladite grandeur énergétique et dudit facteur correctif,
b4) on sélectionne le mode de transmission pour minimiser ladite grandeur énergétique corrigée.

La demanderesse a en effet constaté que des séquences de changements rapides de mode de transmission ont notamment lieu lors des changements de demande de couple, liés en général à des changements de vitesse de ce véhicule.

Le procédé selon l'invention autorise ainsi une prise en compte des changements de demande de couple imminents du véhicule afin de limiter l'occurrence de ces séquences rapides de changement de mode de transmission.

En particulier, grâce à l'invention, les changements imminents de demande de couple (en particulier les changements imminents de la vitesse du véhicule) sont pris en compte dans le processus de sélection du mode de transmission à utiliser, pour éviter un changement de mode de transmission qui serait inutile, car suivi immédiatement d'un autre changement de mode de transmission du fait par exemple du changement effectif de la vitesse du véhicule.

Par exemple, grâce à l'invention, lorsqu'un véhicule automobile approche d'une zone où il doit ralentir, par exemple d'une intersection, et que le mode de transmission en cours d'utilisation est un mode de transmission tout électrique, le procédé selon l'invention permet d'éviter un basculement vers un mode de transmission hybride, car le mode de transmission tout électrique déjà en cours d'utilisation est plus intéressant énergétiquement qu'un mode de transmission hybride lors de la phase de freinage.

Le passage vers le mode de transmission hybride juste avant le freinage entrainerait donc un premier changement de mode de transmission, qui peut impliquer le démarrage du moteur thermique lorsque ce dernier est éteint en mode de transmission tout électrique, presqu'immédiatement suivi d'un deuxième changement de mode de transmission, pour passer à un mode de transmission tout électrique lors du début du freinage.

De manière comparable, grâce à l'invention, lorsqu'un véhicule automobile est sur le point d'accélérer, par exemple pour dépasser un autre véhicule, et que le mode de transmission en cours d'utilisation est un mode de transmission hybride, le procédé selon l'invention permet d'éviter un basculement vers un mode de transmission tout électrique, car le mode de transmission hybride déjà en cours d'utilisation est plus intéressant énergétiquement que le mode de transmission tout électrique lors de la phase d'accélération.

Le passage vers le mode de transmission tout électrique juste avant l'accélération entrainerait donc un premier changement de mode de transmission, presqu'immédiatement suivi d'un deuxième changement de mode de transmission, avec redémarrage du moteur thermique, pour passer à un mode de transmission hybride lors du début de l'accélération.

Le paramètre représentatif d'un changement imminent de demande de couple est ainsi par exemple un paramètre représentatif d'un changement imminent de la vitesse du véhicule.

On remarque toutefois que le changement de demande de couple ne provient pas nécessairement d'un changement de vitesse. Un tel changement de demande de couple peut également provenir par exemple d'un changement de pente de la route empruntée par le véhicule, à vitesse constante.

Selon l'invention, la sélection du mode de transmission utilisé est par ailleurs basée sur une minimisation de la consommation énergétique, ce qui permet d'obtenir un compromis optimal entre une consommation énergétique réduite et des conditions de fonctionnement confortables pour les usagers du véhicule.

D'autre part, ce procédé peut être mis en œuvre dans un véhicule de manière purement logicielle, en s'appuyant seulement sur des données ou des signaux déjà à disposition dans un véhicule automobile, en particulier lorsque celui-ci est équipé d'un dispositif de géolocalisation par signaux GPS (selon l'acronyme anglo-saxon de « Global Positioning System »). La mise en œuvre de ce procédé ne requiert alors avantageusement pas de pièce ou de capteur supplémentaire spécifique.

Préférentiellement, au cours du procédé de gestion de l'énergie selon l'invention, à l'étape a), on détermine, pour chaque mode de transmission, une valeur initiale de ladite grandeur énergétique représentative de la consommation énergétique du groupe motopropulseur ; à l'étape b2), on détermine, pour chaque mode de transmission, une valeur dudit facteur correctif associée à ce mode de transmission ; à l'étape b3), on détermine, pour chaque mode de transmission, une valeur finale de ladite grandeur énergétique corrigée associée à ce même mode de transmission et à l'étape b4), on sélectionne le mode de transmission présentant la valeur finale de la grandeur énergétique corrigée associée à ce mode de transmission la plus faible.

On peut prévoir également que chaque mode de transmission est associé à un rapport de démultiplication et/ou à une répartition de couple entre le moteur thermique et le moteur électrique.

D'autres caractéristiques non limitatives et avantageuses d'un procédé de gestion de l'énergie conforme à l'invention sont les suivantes :

- lesdits modes de transmission comprenant au moins un mode de transmission hybride selon lequel le moteur thermique et le moteur électrique sont tous deux couplés aux roues du véhicule, et un mode de transmission tout électrique selon lequel le moteur électrique seul est couplé aux roues du véhicule, lorsque le mode de transmission en cours d'utilisation est le mode de transmission tout électrique et que ledit paramètre déterminé à l'étape b1) est représentatif d'une diminution imminente de demande de couple, alors, à l'étape b2), ledit facteur correctif est déterminé de manière à présenter une valeur plus grande pour le mode de transmission hybride que pour le mode de transmission tout électrique ;
- lorsque le mode de transmission en cours d'utilisation est le mode de transmission hybride et que ledit paramètre déterminé à l'étape b1) est représentatif d'une augmentation imminente de demande de couple, alors, à l'étape b2), ledit facteur correctif est déterminé de manière à présenter une valeur plus grande pour le mode de transmission tout électrique que pour le mode de transmission hybride ;
- ledit facteur correctif est proportionnel à ladite grandeur énergétique ;
- le véhicule comprenant en outre un dispositif de géolocalisation adapté à fournir une information sur la position du véhicule et des données cartographiques numérisées, à l'étape b1), ledit paramètre représentatif d'un changement imminent de demande de couple est déterminé en fonction de ladite information sur la position du véhicule et desdites données cartographiques numérisées ;
- à l'étape b1), ledit paramètre représentatif d'un changement imminent de demande de couple est déterminé en outre en fonction d'au moins un signal représentatif des conditions de fonctionnement du véhicule ;
- ledit signal représentatif des conditions de fonctionnement du véhicule comprend au moins l'un des signaux suivants : un signal représentatif de la vitesse du véhicule, un signal représentatif de l'état des clignotants du véhicule, un signal représentatif de l'état activé ou désactivé d'un régulateur de vitesse du véhicule ;
- ladite grandeur énergétique est déterminée en sommant la consommation énergétique du moteur thermique avec la consommation énergétique du moteur électrique multipliée par un facteur d'équivalence représentatif du coût relatif d'une énergie électrique par rapport à une énergie thermique pour ledit véhicule ; et
- ladite grandeur énergétique est déterminée en outre en fonction de la fréquence de rotation des roues du véhicule, et/ou d'un couple total demandé au niveau de ces roues.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement des étapes d'un procédé de gestion de l'énergie dans un véhicule hybride selon l'invention,
- la figure 2 est une vue schématique d'une première configuration routière dans laquelle un véhicule automobile est susceptible de décélérer,
- la figure 3 est une vue schématique d'une deuxième configuration routière dans laquelle un véhicule automobile est susceptible de décélérer,
- la figure 4 est une vue schématique d'une troisième configuration routière dans laquelle un véhicule automobile est susceptible de décélérer, et
- la figure 5 est une vue schématique d'une quatrième configuration routière dans laquelle un véhicule automobile est susceptible d'accélérer.

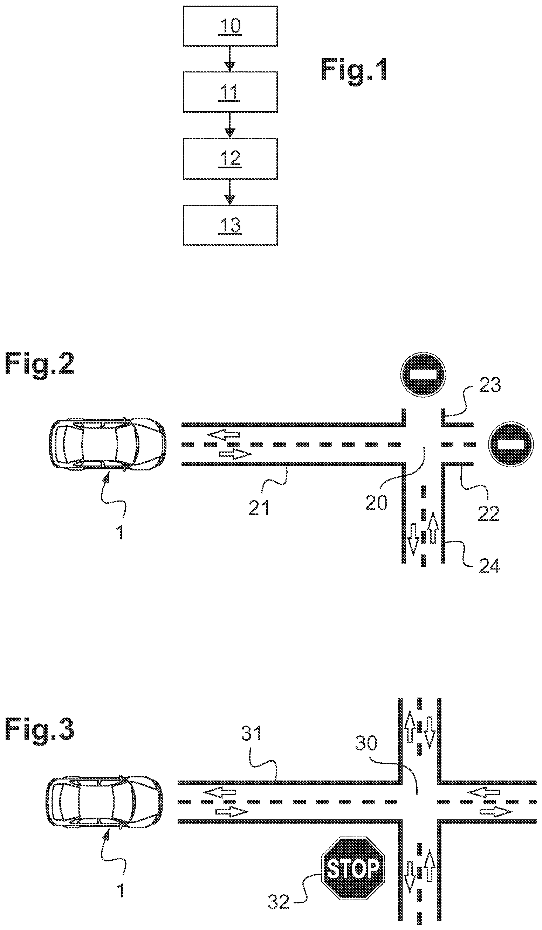

Un exemple de procédé de gestion de l'énergie dans un véhicule 1 automobile hybride (figure 2) selon l'invention est décrit ci-dessous.

Ce véhicule 1 comprend un groupe motopropulseur comportant un moteur thermique et un moteur électrique, adaptés à être couplés à des roues motrices du véhicule 1 par un dispositif de transmission, selon au moins deux modes de transmission, dont l'un est en cours d'utilisation.

Ces modes de transmission comprennent ici :

- au moins un mode de transmission hybride, selon lequel le moteur thermique et le moteur électrique sont couplés tous deux aux roues motrices du véhicule 1, et

- au moins un mode de transmission tout électrique, selon lequel le moteur électrique seul est couplé aux roues motrices du véhicule 1.

Chaque mode de transmission correspond ici à une répartition de couple entre le moteur thermique et le moteur électrique ainsi qu'à un mode cinématique de traction.

Le moteur électrique et le moteur thermique peuvent contribuer tous deux, dans des proportions variables, au couple total produit par le groupe motopropulseur pour répondre à une demande de couple du conducteur.

Chaque répartition de couple entre le moteur thermique et le moteur électrique est associée ici à une valeur d'une première variable de commande u1, par exemple une variable scalaire, représentative de ladite répartition de couple. D'autre part, chaque mode cinématique de traction désigne ici :

- une sélection de l'un ou des deux moteurs, à coupler aux roues motrices du véhicule 1 par le dispositif de transmission, et
- pour chaque moteur à coupler aux roues motrices du véhicule 1, une valeur du rapport de démultiplication entre ce moteur et les roues motrices du véhicule 1.

A titre d'exemple, le mode cinématique de traction peut correspondre à une situation dans laquelle le moteur électrique et le moteur thermique sont couplés tous deux aux roues motrices du véhicule 1, respectivement avec un rapport de démultiplication égal à 5 et à 4.

Chaque mode cinématique de traction est associé ici à une valeur d'une deuxième variable de commande u2, par exemple une variable vectorielle, représentative dudit mode cinématique de traction.

Ainsi, chaque mode de transmission est associé ici à une valeur de cette première variable de commande u1, ainsi qu'à une valeur de cette deuxième variable de commande u2.

Les valeurs de ces première u1 et deuxième variables de commande u2 peuvent être utilisées ici directement par le groupe motopropulseur, ou, ici, par une unité de commande électronique du groupe motopropulseur, pour commander le fonctionnement du moteur électrique, du moteur thermique, et du dispositif de transmission de ce dernier.

Au cours d'un tel procédé de gestion de l'énergie selon l'invention,

a) on détermine une grandeur énergétique H représentative de la consommation énergétique du groupe motopropulseur, et

b) on sélectionne l'un desdits modes de transmission, en fonction de cette grandeur énergétique H.

De manière remarquable, selon l'invention, à l'étape b),

b1) on détermine un paramètre CHG représentatif d'un changement imminent de demande de couple au niveau des roues du véhicule 1 (bloc 10 de la figure 1),

b2) on détermine un facteur correctif COR de ladite grandeur énergétique H, en fonction du mode de transmission en cours d'utilisation et dudit paramètre CHG représentatif d'un changement imminent de demande de couple (bloc 11 de la figure 1),

b3) on détermine une grandeur énergétique corrigée HCOR égale à la somme de de ladite grandeur énergétique H et dudit facteur correctif COR (bloc 12 de la figure 1), et

b4) on sélectionne le mode de transmission pour minimiser ladite grandeur énergétique corrigée HCOR (bloc 13 de la figure 1).

Au cours de l'étape a), la grandeur énergétique H représentative de la consommation énergétique du groupe motopropulseur est déterminée, conformément à la formule F1 ci-dessous, en sommant une consommation énergétique Conso_th du moteur thermique et une consommation énergétique Conso_batt d'une batterie électrique alimentant le moteur électrique, la consommation énergétique Conso_batt de la batterie électrique étant pondérée en la multipliant par un facteur d'équivalence S :

$$H = \mathrm{Conso\_th}(\mathrm{Cth}, \mathrm{Wth}) + S.\,\mathrm{Conso\_batt}(\mathrm{Celec}, \mathrm{Welec}, \mathrm{SOE}) \qquad (F1)$$

La consommation énergétique Conso_th du moteur thermique est égale au produit du débit massique de carburant Mcarb consommé, multiplié par le pouvoir calorifique inférieur PCI du carburant :

$$Conso\_th(Cth, Wth) = Mcarb(Cth, Wth) . PCI \qquad (F2)$$

Le pouvoir calorifique inférieur PCI du carburant permet de convertir un débit massique de carburant, exprimé en gramme par seconde, en une puissance consommée, exprimée en Watt.

Le débit massique de carburant Mcarb est déterminé à partir d'une cartographie de débit de carburant, en fonction d'un point de fonctionnement du moteur thermique défini par une valeur du couple Cth produit par le moteur thermique, et par une valeur de régime moteur Wth de ce moteur, qui correspond à la fréquence ou vitesse de rotation du moteur.

La consommation énergétique Conso_batt de la batterie électrique alimentant le moteur électrique est déterminée à partir d'une cartographie de la puissance absorbée ou fournie par le moteur électrique, en fonction :

- d'un point de fonctionnement du moteur thermique défini par une valeur du couple Celec produit par le moteur électrique et par une valeur de régime moteur Welec de ce moteur, et
- d'une valeur représentative d'un état d'énergie SOE de cette batterie.

Cet état d'énergie SOE correspond par exemple au rapport de l'énergie disponible dans la batterie divisée par l'énergie nominale pour cette batterie, c'est-à-dire par la quantité d'énergie maximale que peut contenir cette batterie.

La consommation énergétique Conso_batt de cette batterie électrique peut prendre des valeurs positives ou négatives. De telles valeurs négatives peuvent par exemple être obtenues lors d'une phase de freinage en récupération au cours de laquelle une partie de l'énergie cinétique du véhicule 1 est récupérée sous forme électrique par l'intermédiaire du moteur électrique.

De manière optionnelle, la consommation énergétique Conso_batt de la batterie électrique alimentant le moteur électrique est déterminée également en prenant en compte la consommation énergétique d'accessoires du véhicule 1, par exemple la consommation énergétique de dispositifs d'éclairage du véhicule.

Le facteur d'équivalence S pondère la consommation d'énergie d'origine électrique par rapport à la consommation d'énergie d'origine thermique en fonction de leur coût relatif. En d'autres termes, le facteur d'équivalence S fixe le coût d'une énergie d'origine électrique par rapport au coût d'une masse correspondante de carburant. Une valeur faible de ce facteur d'équivalence S favorise une consommation de l'énergie stockée sous forme électrique par ladite batterie électrique. Une valeur élevée de ce facteur d'équivalence S favorise au contraire une consommation d'énergie d'origine thermique, ce qui conduit à conserver l'énergie stockée sous forme électrique par ladite batterie électrique, voire à recharger cette batterie.

La valeur du facteur d'équivalence S est déterminée ici en fonction de l'état d'énergie SOE de la batterie électrique.

En variante, la grandeur énergétique H représentative de la consommation énergétique du groupe motopropulseur est déterminée en sommant directement une consommation énergétique du moteur thermique et une consommation énergétique d'une batterie électrique alimentant le moteur électrique, sans pondération.

En pratique, ici, à l'étape a), une valeur de la grandeur énergétique H, représentative de la consommation énergétique du groupe motopropulseur, est déterminée, pour chaque mode de transmission, en fonction des valeurs des première et deuxième variables de commande u1, u2 correspondant à ce mode de transmission, comme expliqué ci-dessous.

Cette valeur de la grandeur énergétique H est déterminée par ailleurs en fonction :

- de la fréquence de rotation Froue au niveau des roues motrices du véhicule 1,
- du couple total Ctotal à produire au niveau de ces roues pour répondre à la demande de couple du conducteur, et
- de l'état d'énergie SOE de ladite batterie électrique.

La valeur de chacun de ces paramètres de fonctionnement du véhicule 1 est déterminée par les équipements du véhicule 1.

En effet, le véhicule 1 comprend ici un capteur adapté à mesurer la fréquence de rotation Froue au niveau des roues motrices.

Le couple total Ctotal à produire au niveau de ces roues est quant à lui déterminé en fonction du couple demandé par le conducteur au niveau de la pédale d'accélérateur ou au niveau de la pédale de frein. On notera que le couple total peut prendre des valeurs positives, mais aussi des valeurs négatives, par exemple en phase de freinage.

Enfin, l'état d'énergie SOE de la batterie électrique alimentant le moteur électrique peut être déterminé à partir de mesures électriques portant sur cette batterie, selon une quelconque méthode connue de l'homme du métier.

Le régime Wth du moteur thermique et le régime Welec du moteur électrique sont par exemple déterminés conformément aux relations F3 et F4 suivantes :

$$Wth = Rth(u2) \cdot Froue \qquad (F3)$$

$$Welec = Relec(u2) \cdot Froue \qquad (F4)$$

La valeur du rapport de démultiplication Rth entre le moteur thermique et les roues motrices du véhicule 1, et la valeur du rapport de démultiplication Relec entre le moteur électrique et ces roues, sont déterminées chacune à partir de la valeur de la deuxième variable de commande u2, puisque cette dernière est représentative d'un mode cinématique de traction donné.

La valeur du couple produit par le moteur électrique Celec et celle du couple produit par le moteur thermique Cth sont déduites :

- de la relation F5 suivante

$$Ctotal = Rth(u2) \cdot Cth + Relec(u2) \cdot Celec \qquad (F5)$$

- et de la répartition de couple entre le moteur thermique et le moteur électrique.

Cette répartition de couple est déduite de la valeur de la première variable de commande u1.

Ici, par exemple, la première variable de commande u1 est égale au rapport du couple produit par le moteur thermique au niveau des roues motrices du véhicule, divisé par le couple total produit par le groupe motopropulseur au niveau de ces roues :

$$u1 = Rth(u2) \cdot Cth \, / \, Ctotal \qquad (F6).$$

Ainsi, la relation F5 permet effectivement de déterminer la valeur du couple produit par le moteur électrique Celec et celle du couple produit par le moteur thermique Cth en fonction des valeurs des première et deuxième variables de commande u1, u2, pour une valeur donnée du couple Ctotal à fournir pour répondre à une demande de couple du conducteur du véhicule 1.

Ici, plus particulièrement, au cours de l'étape a), on détermine, pour chaque mode de transmission, une valeur initiale de ladite grandeur énergétique H représentative de la consommation énergétique du groupe motopropulseur.

A l'étape b1), au cours de laquelle on détermine un paramètre CHG représentatif d'un changement imminent de demande de couple, on effectue les étapes suivantes :

b11) on identifie une configuration routière susceptible de correspondre à une augmentation ou une diminution du couple demandé, par exemple du fait d'une accélération ou d'une décélération du véhicule 1 imminente, en fonction d'une information sur la position du véhicule 1 déterminée par un dispositif de géolocalisation, et de données cartographiques numérisées,
b12) on détermine que la situation du véhicule 1 est une situation d'augmentation ou de diminution effective de la demande de couple, par exemple une situation d'accélération ou de décélération imminente effective, en combinant des données représentatives de la configuration routière identifiée avec des signaux représentatif du fonctionnement du véhicule 1, notamment des signaux représentatifs d'une intention du conducteur de changer de direction et/ou de vitesse, et
b13) on détermine le paramètre CHG représentatif d'un changement imminent de demande de couple.

Le dispositif de géolocalisation utilisé au cours de la sous-étape b11) est par exemple un système de navigation du véhicule 1.

Ce système de navigation permet de déterminer, par exemple grâce à des signaux GPS ou GMS (selon l'acronyme anglo-saxon de « Global System for Mobile communication ») qu'il reçoit, ladite information sur la position du véhicule 1, ici des coordonnées géographiques repérant le véhicule 1.

Ce système de navigation comprend également lesdites données cartographiques numérisées. Ces données cartographiques décrivent notamment le réseau de voies de circulation qu'emprunte le véhicule 1. Ces données cartographiques décrivent en particulier la forme de ces voies de circulation et indiquent une vitesse maximale autorisée VMA correspondante.

Le véhicule 1 peut ainsi être localisé sur ce réseau de voies de circulation, par exemple par un processus de mise en correspondance de ses coordonnées géographiques et desdites données géographiques numérisées (ou processus de « Map Matching » selon la dénomination anglo-saxonne). La précision de cette localisation du véhicule 1 sur ce réseau routier peut être améliorée par la prise en compte des données odométriques du véhicule 1, c'est-à-dire par la prise en compte du nombre de mètres parcourus par ce véhicule depuis une position donnée.

Les données cartographiques numérisées utilisées dans ce système de navigation sont globalement décrites comme expliqué ci-dessous.

Chaque segment de route est décrit par un arc, auquel peuvent être associées des données décrivant ce segment de route, telles que :

- la vitesse maximale autorisée VMA sur ce segment ;
- le nombre de voies de circulation et le sens de circulation qui leur correspond ;
- la classe fonctionnelle de la route, qui indique s'il s'agit d'un segment de chemin, par exemple, ou encore s'il s'agit d'un segment d'autoroute, ou de route nationale ; ces différentes classes fonctionnelles sont ici classées par ordre croissant, depuis celle correspondant à un chemin, jusqu'à celle correspondant à une autoroute ; et
- de manière optionnelle, la vitesse moyenne des véhicules présents sur ce segment ou sur cette route, cette donnée étant issue par exemple d'informations sur l'état du trafic routier, reçues par le système de navigation, en provenance d'un réseau de télécommunication.

Chaque arc est décrit en outre par des points, ou nœuds, situés le long de cet arc. La position de chaque nœud est connue, en particulier la latitude, longitude et altitude correspondantes. Les nœuds d'un arc permettent ainsi de décrire la forme du segment de route considéré.

Chaque nœud peut en outre porter des informations relatives aux propriétés du segment de route correspondant, au niveau du nœud considéré, telles par exemple que :

- la présence d'un panneau de signalisation routière au niveau de ce nœud, par exemple un panneau indiquant un STOP,
- une valeur du rayon de courbure RC du segment de route au niveau de ce nœud ; cette donnée peut ainsi renseigner sur la présence d'un virage serré,
- la présence d'un passage à niveau ou d'un ralentisseur au niveau de ce nœud,
- la présence d'une intersection au niveau de ce nœud, ce qui se traduit pour le système de navigation par le fait que ce nœud appartient à plusieurs arcs présentant des orientations différentes.

Les données cartographiques numérisées comprennent ainsi des données décrivant la portion de route qui fait face au véhicule 1 et permettant d'identifier, pour le véhicule 1, une configuration routière susceptible de correspondre à une augmentation ou à une diminution imminente du couple demandé, liée en général à une décélération ou à une accélération imminente, mais éventuellement liée à un changement de pente de la route empruntée par le véhicule 1 à vitesse constante.

Cette configuration routière correspond par exemple à un changement d'une propriété de la route empruntée par le véhicule 1 ou à un changement des conditions de circulation, tels que :

- un changement de pente,
- un changement du nombre de voies de circulation,
- un changement de direction correspondant à un virage serré ou à une intersection,
- un changement de vitesse limite de circulation,
- une obligation d'arrêter le véhicule 1, indiquée par exemple par un dispositif de signalisation routier, ou
- un passage d'une zone de circulation peu encombrée à une zone de circulation encombrée, ou inversement.

Les figures 2 à 5 représentent schématiquement quatre exemples de configuration routière dans laquelle le véhicule 1 automobile est susceptible soit de décélérer soit d'accélérer, et donc d'entraîner un changement de la demande de couple au niveau des roues.

Dans une première configuration routière représentée sur la figure 2, le véhicule 1 automobile approche d'une intersection 20 reliant le segment 21 sur lequel est situé le véhicule 1 à trois autres segments de route 22, 23, 24, dont l'un 22 est en sens interdit, et dont les deux autres 22, 23 sont autorisés et présentent une orientation différente de celle du segment 21 sur lequel est situé le véhicule 1.

Dans une deuxième configuration routière représentée sur la figure 3, le véhicule 1 automobile approche d'une intersection 30 munie, pour le segment de route 31 emprunté par le véhicule 1, d'un panneau de signalisation 32 indiquant un STOP.

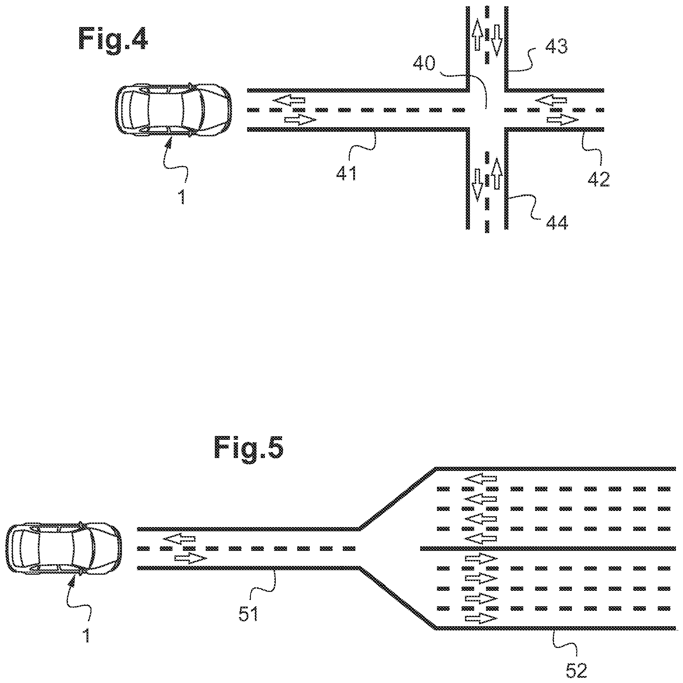

Dans une troisième configuration routière représentée sur la figure 4, le véhicule 1 automobile approche d'une intersection 40 reliant quatre segments de route 41, 42, 43, 44 chacun à double sens de circulation, ladite intersection ne présentant pas de panneaux ou de signaux routiers.

Les première, deuxième et troisième configurations routières représentées sur les figures 2 à 4 sont susceptibles de mener à une décélération du véhicule 1, et donc à une diminution de la demande de couple au niveau des roues.

Dans une quatrième configuration routière représentée sur la figure 5, le véhicule 1 automobile est situé sur un segment de route 51 sur lequel la vitesse maximale autorisée est de 90 kilomètres par heure, prolongé par un segment d'autoroute 52 sur lequel la vitesse maximale autorisée est de 90, 110 ou 130 kilomètres par heure selon les conditions météorologiques et le type de véhicule.

La quatrième configuration routière de la figure 5 est susceptible de mener à une accélération du véhicule 1, et donc à une augmentation de la demande de couple au niveau des roues.

Lorsque l'une des configurations routières susceptibles de correspondre à une décélération imminente du véhicule 1 est identifiée à la sous-étape b11) s'accompagne en outre :

- d'une détermination d'une valeur de la distance D séparant la position courante du véhicule 1 et la position de l'élément routier susceptible d'engendrer ladite décélération, et
- d'une détermination de la valeur d'une vitesse de passage VP préconisée pour le véhicule 1 au niveau dudit élément routier.

Cet élément routier correspond par exemple, pour le cas représenté figure 3, au panneau signalant le STOP qui doit être marqué au niveau de l'intersection correspondante.

La valeur de cette distance D est déterminée ici à partir de la position courante du véhicule 1 et de la position dudit élément routier, chacune repérée sur le réseau de voies de circulation décrit par lesdites données cartographiques.

La valeur de la vitesse de passage VP préconisée correspond, pour certaines configurations routières, à une valeur prédéterminée donnée. Par exemple, elle est ici prise égale à 20 kilomètres par heure pour une intersection où le véhicule 1 sera obligé de bifurquer vers un segment de route qui ne se trouve pas dans son prolongement, comme représenté figure 2,

Pour d'autres configurations routières, la valeur de cette vitesse de passage VP préconisée est déterminée à partir des données décrivant la portion de route qui fait face au véhicule 1, disponibles dans le système de navigation. Ces données peuvent par exemple correspondre à la vitesse maximale autorisée VMA, ou au rayon de courbure RC de la route, au niveau du nœud repérant ledit élément routier susceptible d'engendrer une décélération.

En particulier, lorsque cet élément routier correspond à un virage serré, la valeur de la vitesse de passage VP préconisée est ici égale à une vitesse maximale Vmax(RC) associée au rayon de courbure RC de ce virage déterminée conformément à la formule F9 suivante :

$$VP = Vmax\,(RC) = \lambda \,.\; 3{,}6 \,.\, \sqrt{g.\,\mu_{max}.RC} \quad (F9)$$

où :

- la vitesse maximale Vmax(RC) associée au rayon de courbure RC de ce virage est exprimée en kilomètres par heure,
- le rayon de courbure RC de ce virage est exprimé en mètres,
- $\mu_{max}$ est un coefficient d'adhérence latérale maximal du véhicule,
- g est l'accélération de la pesanteur, exprimée en mètres par secondes carrées,
- et λ est un coefficient de sécurité, positif et inférieur à 1, dont la valeur est prédéterminée de manière à ce que cette vitesse de passage VP préconisée soit inférieure à une vitesse limite à partir de laquelle le véhicule 1 déraperait dans ce virage, de manière à ménager une marge de sécurité entre la vitesse de passage VP préconisée et cette vitesse limite.

Les tableaux 1 et 2 ci-dessous rassemblent des exemples de configurations routières identifiées comme susceptibles de correspondre à une accélération ou à une décélération imminente. Les configurations décrites dans ce tableau sont données à titre d'exemple ; d'autres configurations routières rencontrées par un véhicule automobile sont susceptibles de correspondre à une accélération ou à une décélération imminente.

| Tableau 1 | |
| --- | --- |
| exemples de configurations routières susceptibles de correspondre à une accélération imminente | |
| code de la configuration routière identifiée | description de la configuration routière |
| A1 | Le véhicule 1 est sur une voie d'accès à une autoroute (figure 5) :<br>- pour le segment courant, la classe fonctionnelle est inférieure à celle d'une autoroute, et VMA $\leq$ 90 km/h<br>- pour le segment suivant, la classe fonctionnelle est celle d'une autoroute et VMA $\geq$ 90 km/h. |
| A2 | Le véhicule 1 est sur une route avec possibilité de dépassement ; pour le segment courant :<br>- 50 km/h $\leq$ VMA $\leq$ 90 km/h ,<br>- le nombre de voies de circulation dans le sens de parcours est supérieur à 2, et<br>- sur les 500 prochains mètres, aucun noeud ne correspond à une intersection. |
| A3 | Le véhicule 1 est sur une autoroute : pour le segment courant, la classe fonctionnelle est celle d'une autoroute et VMA $\geq$ 90 km/h . |

| Tableau 2 | | |
| --- | --- | --- |
| exemples de configurations routières susceptibles de correspondre à une décélération imminente | | |
| code de la configuration routière identifiée | description de la configuration routière | vitesse de passage VP préconisée |
| D1 | Le véhicule 1 approche d'un STOP (figure 3) : le segment courant comprend un noeud correspondant à une intersection et au niveau duquel un panneau STOP est indiqué. | 0 |
| D2 | Le véhicule 1 approche d'une intersection avec obligation de changer de direction (figure 2) :<br>- le segment courant comprend un noeud correspondant à une intersection,<br>- les segments suivants autorisés (ne présentant pas un sens interdit) présentent une orientation différente de celle du segment courant. | 20 km/h |
| D3 | Le véhicule 1 approche d'une intersection présentant au moins une possibilité de changement de direction (figure 4) :<br>- le segment courant comprend un noeud correspondant à une intersection,<br>- au moins un segment suivant autorisé présente une orientation différente de celle du segment courant. | 20 km/h |
| D4 | Le véhicule 1 est sur une voie de sortie d'autoroute, à l'approche d'une telle sortie. | égale à la VMA associée à cette voie de sortie |
| D5 | Le véhicule 1 approche d'un virage : le segment courant contient un noeud pour lequel un rayon de courbure RC < 100 m est indiqué. | égale à Vmax(RC) |
| D6 | Le véhicule 1 approche d'un rondpoint : le segment courant contient un noeud correspondant à une intersection, et ce segment correspond à un rondpoint. | Vmax(RC) |

Lors de la sous-étape b12) suivante, on évalue si la situation du véhicule 1 est une situation d'augmentation ou de diminution effective de la demande de couple, du fait par exemple d'une situation d'accélération ou de décélération imminente effective.

Pour cela, des données représentatives de la configuration routière identifiée à la sous-étape b11) précédente sont combinées avec des signaux représentatifs du fonctionnement du véhicule 1, notamment des signaux représentatifs d'une intention du conducteur de changer de direction et/ou de vitesse.

Lesdites données représentatives de la configuration routière identifiée comprennent ici par exemple :

- un code associé à cette configuration routière, indiqué dans les tableaux 1 et 2 pour les exemples de configurations routières correspondant,
- une vitesse maximale autorisée VMA dans cette configuration routière, et
- lorsque la configuration routière identifiée est susceptible de correspondre à une décélération imminente du véhicule 1, une valeur de la distance limite DLIM et une valeur de la vitesse de passage VP préconisée.

Les signaux représentatifs des conditions de fonctionnement du véhicule utilisés à cette fin comprennent ici par exemple :

- un signal représentatif de la vitesse V du véhicule 1,
- un signal représentatif de l'état des clignotants du véhicule, à savoir : éteints, en warning, avec le clignotant droit actif ou encore avec le clignotant gauche actif, et
- un signal représentatif de l'état activé ou désactivé d'un régulateur de vitesse équipant le véhicule 1.

Dans les configurations routières où le véhicule 1 circule sur autoroute ou sur une route avec possibilité de dépassement, ce qui correspond par exemple aux configurations routières A3 et A2 du tableau 1, le fait que le clignotant gauche soit actif indique une intention probable du conducteur du véhicule 1 de dépasser un autre véhicule. Dans ce cas, si le régulateur de vitesse est inactif, on détermine que le véhicule 1 est dans une situation d'accélération imminente effective.

En revanche, lorsque le véhicule 1 circule sur une autoroute, que son clignotant gauche est actif, mais que le régulateur de vitesse est activé, on considère ici que la vitesse du véhicule va être maintenue sensiblement constante, et on détermine donc que le véhicule 1 n'est pas dans une situation d'accélération imminente effective.

D'autre part, dans l'une des configurations routières où le véhicule 1 approche d'une intersection présentant au moins une possibilité de changement de direction (figure 4), ce qui correspond par exemple à la configuration D3 du tableau 2, le fait que le clignotant gauche ou droit soit actif indique une intention probable du conducteur du véhicule 1 de changer de direction. Dans ce cas, on détermine que le véhicule 1 est dans une situation de décélération imminente effective.

Par ailleurs, dans l'une des configurations routières susceptibles de correspondre à une accélération imminente, lorsque la vitesse V du véhicule 1 est proche de la vitesse maximale autorisée VMA sur le segment de route emprunté, on détermine à l'étape b12) que le véhicule 1 n'est pas dans une situation d'accélération imminente effective, puisqu'il n'est pas autorisé à augmenter substantiellement sa vitesse V.

De manière comparable, dans l'une des configurations routières susceptibles de correspondre à une décélération imminente, lorsque la vitesse V du véhicule 1 est proche de la vitesse de passage VP préconisée dans cette configuration routière, on détermine ici que le véhicule 1 n'est pas dans une situation de décélération imminente effective, puisque sa vitesse est déjà suffisamment faible pour être adaptée à la configuration routière rencontrée.

Les tableaux 3 et 4 ci-dessous résument, pour les exemples de configurations routières décrites dans les tableaux 1 et 2, les conditions à vérifier pour déterminer que le véhicule 1 est dans une situation d'accélération ou de décélération imminente effective.

| Tableau 3 | | | |
|---|---|---|---|
| | conditions à vérifier pour déterminer que le véhicule 1 est effectivement dans une situation d'accélération imminente effective | | |
| code de la configuration routière identifiée | état des clignotants | état du régulateur de vitesse | écart entre la vitesse maximale autorisée VMA sur le segment emprunté et la vitesse V du véhicule 1 |
| A1 | quelconque | quelconque | VMA - V > 20 km/h |
| A2 | clignotant gauche actif | désactivé | écart de vitesse quelconque |

(suite)

| Tableau 3 | | | |
|---|---|---|---|
| | conditions à vérifier pour déterminer que le véhicule 1 est effectivement dans une situation d'accélération imminente effective | | |
| code de la configuration routière identifiée | état des clignotants | état du régulateur de vitesse | écart entre la vitesse maximale autorisée VMA sur le segment emprunté et la vitesse V du véhicule 1 |
| A3 | clignotant gauche actif | désactivé | VMA - V > 20 km/h |

| Tableau 4 | | | |
|---|---|---|---|
| | conditions à vérifier pour déterminer que le véhicule 1 est effectivement dans une situation de décélération imminente effective | | |
| code de la configuration routière identifiée | état des clignotants | état du régulateur de vitesse | écart entre la vitesse V du véhicule 1 et la vitesse de passage VP préconisée |
| D1 | quelconque | quelconque | écart de vitesse quelconque |
| D2 | quelconque | quelconque | V - VP > 20 km/h |
| D3 | clignotant gauche ou droit actif | quelconque | V - VP > 20 km/h |
| D4 | clignotant droit actif | désactivé | V - VP > 20 km/h |
| D5 | quelconque | quelconque | V - VP > 20 km/h |
| D6 | quelconque | quelconque | V - VP > 20 km/h |

Les conditions décrites ci-dessus, portant sur l'état des clignotants, sont données ici pour un trafic automobile à droite (tel qu'un trafic en France ou en Allemagne, par exemple). L'Homme du Métier pourra les adapter sans difficulté au cas d'un trafic automobile à gauche (tel qu'un trafic au Royaume Uni ou au Japon, par exemple).

A la sous-étape b13), le paramètre CHG est ici une variable pouvant prendre trois valeurs différentes :

- une première valeur, par exemple 0, indiquant un maintien probable de la demande de couple au niveau des roues du véhicule 1 à une valeur sensiblement constante, par exemple en cas de maintien probable de la vitesse du véhicule 1 sur route plate,
- une deuxième valeur, par exemple 1, indiquant une augmentation imminente de la demande de couple, du fait par exemple d'une accélération imminente sur route plate, et
- une troisième valeur, par exemple 2, indiquant une diminution imminente de la demande de couple, du fait par exemple d'une décélération imminente sur route plate.

Par défaut, ici, la valeur 0 est attribuée au paramètre CHG.

Lorsque la situation d'accélération imminente effective a été déterminée au cours de la sous-étape b12) précédente, et dans le cas où la route empruntée est plate, on attribue la valeur 1 au paramètre CHG, et cela :

- dès que cette situation d'accélération imminente effective est déterminée,
- et pour une durée inférieure à une durée maximale donnée.

Ici, cette durée maximale donnée est inférieure à 20 secondes.

Lorsqu'une durée supérieure à cette durée maximale s'est écoulée depuis la détermination de la situation d'accélération imminente effective, la valeur 0 est attribuée à nouveau au paramètre CHG.

La durée pendant laquelle la valeur 1 est attribuée au paramètre CHG, suite à la détermination de la situation d'accélération imminente effective, est limitée pour éviter de maintenir cette valeur à 1 dans le cas où le conducteur du véhicule décide finalement de ne pas accélérer.

Lorsque la situation de décélération imminente effective est déterminée, et dans le cas où la route empruntée est plate, on attribue la valeur 2 au paramètre CHG, et cela :

- dès que la distance D qui sépare le véhicule 1 de l'élément routier responsable de ladite décélération est inférieure à une distance limite DLIM,
- et tant que cet élément routier n'est pas dépassé.

Cette distance limite DLIM est déterminée en fonction de la vitesse V du véhicule 1 : elle est d'autant plus grande que la vitesse V du véhicule 1 est élevée.

Cette disposition permet avantageusement de signaler une situation de décélération effective d'autant plus loin de l'élément ralentisseur que la vitesse V du véhicule 1 est élevée.

Ici, par exemple, on adopte les valeurs suivantes de distances limites :

- DLIM = 300 mètres pour V = 100 kilomètres par heure, et
- DLIM = 40 mètres pour V = 30 kilomètres par heure.

En variante, le paramètre CHG représentatif d'un changement de la vitesse du véhicule imminent est déterminé en outre, au cours de l'étape b1), en fonction d'autres données ou signaux relatifs à au fonctionnement du véhicule automobile, par exemple des données représentatives d'images de l'environnement faisant face au véhicule 1, acquises par une caméra équipant ce véhicule et traitées au moyen d'un logiciel approprié.

Le facteur correctif COR est déterminé de manière à pénaliser le passage du groupe motopropulseur dans un mode de transmission qui deviendra défavorable énergétiquement après le changement de vitesse du véhicule.

Plus précisément, ici, le facteur correctif COR est déterminé de manière à pénaliser le passage du groupe motopropulseur dans un mode cinématique présentant une sélection de l'un ou des deux moteurs qui deviendra défavorable énergétiquement après le changement de vitesse du véhicule.

Ici, lorsque le paramètre CHG représentatif d'un changement imminent de demande de couple indique qu'une diminution du couple demandé est imminente, et lorsque le mode de transmission en cours d'utilisation est l'un des modes de transmission tout électrique, alors, le facteur correctif COR correspondant à chaque mode de transmission hybride est déterminé de manière à être supérieur à celui correspondant à l'un quelconque des modes de transmission tout électrique.

Ce facteur correctif COR est dans ce cas un facteur pénalisant le passage vers l'un des modes de transmission hybride. Il favorise le maintien de l'un des modes de transmission tout électrique.

Plus précisément, dans un tel cas, le facteur correctif COR est ici :

- égal à une fraction de la valeur absolue de ladite grandeur énergétique H: COR = CAL1. |H| (F7) pour chaque mode de transmission hybride, et
- égal à 0 pour chaque mode de transmission tout électrique.

Pour chaque mode de transmission hybride du véhicule, l'amplitude du facteur correctif COR, par rapport à ladite grandeur énergétique H, est donnée par une première constante de calibration CAL1, positive. Par ailleurs, la grandeur énergétique H est prise en valeur absolue pour déterminer ce facteur correctif COR, de manière à ce que ce dernier reste positif même lorsque la grandeur énergétique H prend une valeur négative, par exemple au cours d'une phase de freinage en récupération.

De manière comparable, ici, lorsque le paramètre CHG représentatif d'un changement imminent de demande de couple indique qu'une augmentation du couple demandé est imminente, et lorsque le mode de transmission en cours d'utilisation est l'un des modes de transmission hybrides, alors, le facteur correctif COR correspondant à chaque mode de transmission tout électrique est déterminé de manière à être supérieur à celui correspondant à l'un quelconque des modes de transmission hybrides.

Le facteur correctif COR est alors un facteur pénalisant le passage vers l'un des modes de transmission tout électrique. Il favorise le maintien du groupe motopropulseur dans l'un des modes de transmission hybrides.

Plus précisément, dans un tel cas, le facteur correctif COR est ici :

- égal à une fraction de la valeur absolue de ladite grandeur énergétique H : COR = CAL2 . |H| (F8) pour chaque mode de transmission tout électrique, et
- égal à 0 pour chaque mode de transmission hybride.

La deuxième constante de calibration CAL2 est là encore positive. Ici, la première CAL1 et la deuxième constante de calibration CAL2 présentent la même valeur. En variante, la première CAL1 et la deuxième constante de calibration CAL2 présentent des valeurs différentes.

D'autre part, ici, lorsque la situation dans laquelle se trouve le véhicule ne correspond:

- ni à une augmentation imminente du couple demandé et à un mode de transmission en cours d'utilisation hybride,
- ni à une diminution imminente du couple demandé et à un mode de transmission en cours d'utilisation tout électrique, alors, on détermine le facteur correctif COR de manière à ce qu'il soit identique pour tous les modes de transmissions.

Plus précisément, ici, le facteur correctif COR pris égal à 0 pour chaque mode de transmission, dans un tel cas.

En variante, le facteur correctif est déterminé selon une quelconque autre méthode adaptée :

- à ce que le facteur correctif correspondant à chaque mode de transmission hybride soit supérieur au facteur correctif correspondant à un quelconque mode de transmission tout électrique lorsque le paramètre représentatif d'un changement imminent de demande de couple indique qu'une diminution du couple demandé est imminente, et lorsque le mode de transmission en cours d'utilisation est un mode de transmission tout électrique, et
- à ce que le facteur correctif correspondant à chaque mode de transmission tout électrique soit supérieur au facteur correctif correspondant à un quelconque mode de transmission hybride lorsque le paramètre représentatif d'un changement imminent de demande de couple indique qu'une augmentation du couple demandé est imminente, et lorsque le mode de transmission en cours d'utilisation est un mode de transmission hybride.

Ici, plus particulièrement, au cours de l'étape b2), on détermine, pour chaque mode de transmission, une valeur dudit facteur correctif associée à ce mode de transmission.

Au cours de l'étape b3), on détermine la grandeur énergétique corrigée HCOR en sommant la grandeur énergétique H représentative de la consommation énergétique du véhicule 1 et ledit facteur correctif COR :

$$\mathrm{HCOR} = \mathrm{H} + \mathrm{COR} \qquad (F9)$$

Ici, plus particulièrement, on détermine pour chaque mode de transmission, une valeur finale associée de ladite grandeur énergétique corrigée HCOR.

Au cours de l'étape b4), on sélectionne le mode de transmission pour minimiser ladite grandeur énergétique corrigée HCOR.

Ici, on sélectionne pour cela le mode de transmission présentant la valeur finale de la grandeur énergétique corrigée HCOR associée à ce mode de transmission la plus faible.

Le mode de détermination de la grandeur énergétique H et du facteur correctif COR décrit ci-dessus, combiné à une sélection d'un mode de transmission par minimisation de la grandeur énergétique corrigée HCOR, permet avantageusement de minimiser la consommation énergétique du véhicule 1, tout en évitant de changer de mode de transmission dans une situation où ce changement serait suivi presque immédiatement d'un retour au mode de transmission initial du fait d'un changement de couple demandé, par exemple en raison d'un changement de vitesse du véhicule.

En particulier, lorsqu'une diminution du couple demandé est imminente et que le mode de transmission en cours d'utilisation est l'un des modes de transmission tout électrique, chaque mode de transmission hybride est ici avantageusement peu susceptible d'être sélectionné, puisque le facteur correctif COR qui lui est associé est dans ce cas supérieur à celui associé à l'un quelconque des modes de transmission tout électrique, et que ladite sélection est réalisée par minimisation de ladite grandeur énergétique corrigée HCOR.

De manière comparable, lorsqu'une augmentation du couple demandé est imminente et que le mode de transmission en cours d'utilisation est l'un des modes de transmission hybride, l'un des modes de transmission tout électrique est ici avantageusement peu susceptible d'être sélectionné puisque le facteur correctif COR qui lui est associé est dans ce cas supérieur à celui associé à l'un quelconque des modes de transmission hybrides.

Dans l'exemple de la figure 3, on considère deux modes de transmission :

- un mode de transmission ZEV1 tout électrique, et
- un mode de transmission Hyb1 hybride.

Dans cet exemple, le véhicule 1 approche d'une intersection où il doit marquer un STOP (figure 3). Ceci correspond à l'une des configurations routières susceptible de correspondre à une décélération. Cette configuration routière est associée à une situation de décélération effective, et donc de diminution du couple demandé au niveau des roues, quelles que soient les valeurs desdits signaux représentatifs des conditions de fonctionnement du véhicule 1.

Le mode de transmission en cours d'utilisation est le mode ZEV1.

Dans cette première situation, la grandeur énergétique H représentative de la consommation énergétique du groupe motopropulseur présente les valeurs suivantes :

- pour le mode de transmission ZEV1 :
  H(ZEV1) = (1 gramme par seconde).PCI
- et pour le mode de transmission Hyb1 :
  H(Hyb1) = (0,9 gramme par seconde).PCI

Par ailleurs, dans cette situation initiale, le paramètre CHG représentatif d'un changement imminent de demande de couple indique ici une diminution imminente du couple demandé. La première constante de calibration CAL1 vaut ici 20%, soit CAL1=0,2. Dans cette situation initiale, le facteur correctif COR et la grandeur énergétique corrigée HCOR présentent donc les valeurs suivantes :

- pour le mode de transmission ZEV1 :

  COR(ZEV1) = 0
  HCOR(ZEV1) = (1 gramme par seconde).PCI

- et pour le mode de transmission Hyb1 :

  COR(Hyb1) = (0,18 gramme par seconde).PCI et
  HCOR(Hyb1) = (1,08 gramme par seconde).PCI.

La grandeur énergétique corrigée HCOR présentent donc une valeur plus petite pour le mode de transmission ZEV1 que pour le mode de transmission Hyb1.

Le mode de transmission sélectionné est alors le mode de transmission ZEV1, si bien que c'est ce mode qui continue d'être utilisé dans le véhicule 1.

Par la suite, le véhicule 1 approchant de l'intersection, son conducteur freine et la vitesse du véhicule 1 diminue. Dans cette deuxième situation, ladite grandeur énergétique H, le facteur correctif COR et la grandeur énergétique corrigée HCOR présentent les valeurs suivantes :

- pour le mode de transmission ZEV1 :

  H(ZEV1) = (-0,3 gramme par seconde).PCI
  COR(ZEV1) = 0
  HCOR(ZEV1) = (-0,3 gramme par seconde).PCI

- et pour le mode de transmission Hyb1 :

  H(Hyb1) = (0,1 gramme par seconde).PCI
  COR(Hyb1) = (0,02 gramme par seconde).PCI et
  HCOR(Hyb1) = (0,12 gramme par seconde).PCI.

Le mode de transmission sélectionné est donc alors le mode de transmission ZEV1, si bien que c'est ce mode qui continue encore d'être utilisé dans le véhicule 1.

Ainsi, grâce à l'invention, on évite de sélectionner, dans la première situation, le mode de transmission Hyb1 hybride. En effet, si ce mode était sélectionné, il ne serait utilisé qu'un temps très court, avant un retour au mode de transmission ZEV1 tout électrique dans la deuxième situation. De tels changements rapides de mode de transmission sont perçus de manière désagréable par le conducteur.

Dans une variante de ce procédé de gestion de l'énergie selon l'invention, il est prévu en outre, à l'étape b2) lorsque le paramètre représentatif d'un changement imminent de demande de couple indique une diminution du couple demandé lié à une décélération imminente, et que le mode de transmission en cours d'utilisation est l'un des modes de transmission hybrides, de déterminer le facteur correctif de manière à ce qu'il présente, pour l'un des modes de transmission hybrides, correspondant à un rapport de démultiplication du moteur thermique inférieur au rapport de démultiplication du moteur thermique en cours d'utilisation, une valeur supérieure à celle associée au mode de transmission en cours d'utilisation.

Pour un véhicule roulant à vitesse réduite, il est connu d'utiliser, pour coupler un moteur thermique à des roues de ce véhicule, un rapport de démultiplication élevé, de manière à ce que ce moteur soit utilisé sur un bon point de fonctionnement. Tandis qu'il est connu d'utiliser un rapport de démultiplication plus faible lorsque la vitesse du véhicule est élevée.

Le mode de détermination du facteur correctif correspondant à cette variante permet avantageusement d'éviter un changement de mode de transmission qui conduirait à une réduction du rapport de démultiplication du moteur thermique alors même que le véhicule est sur le point de décélérer. Il est intéressant d'éviter ce changement de mode de transmission, car il serait suivi presque immédiatement, du fait de la diminution de vitesse du véhicule, d'un autre changement de mode de transmission permettant un retour à un rapport de démultiplication du moteur thermique élevé.

Ici, le facteur correctif COR est déterminé de manière à pénaliser le passage du groupe motopropulseur dans un mode cinématique présentant un rapport de démultiplication qui deviendra défavorable après le changement de vitesse du véhicule.

De manière optionnelle, il est prévu en outre dans cette variante : lorsque le paramètre représentatif d'un changement imminent de demande de couple indique une augmentation du couple demandé lié à une accélération imminente, et que le mode de transmission en cours d'utilisation est l'un des modes de transmission hybrides, de déterminer le facteur correctif de manière à favoriser la sélection de l'un des modes de transmission hybrides, correspondant à un rapport de démultiplication du moteur thermique supérieur au rapport de démultiplication du moteur thermique en cours d'utilisation.

Cette dernière disposition permet avantageusement d'induire un changement de mode de transmission entraînant une augmentation du rapport de démultiplication du moteur thermique, c'est-à-dire de rétrograder, lorsque le véhicule est sur le point d'accélérer. Le confort de conduite est ainsi encore amélioré puisque l'on favorise le rapport admissible avec la plus grande réserve de couple disponible.

## Revendications

1. Procédé de gestion de l'énergie dans un véhicule (1) automobile hybride comprenant un groupe motopropulseur comportant un moteur thermique et un moteur électrique adaptés à être couplés à des roues du véhicule (1) par un dispositif de transmission selon au moins deux modes de transmission (Hyb1, ZEV1), dont l'un est en cours d'utilisation, selon lequel

   a) on détermine une grandeur énergétique (H) représentative de la consommation énergétique du groupe motopropulseur, et
   b) on sélectionne l'un desdits modes de transmission (Hyb1, ZEV1) en fonction de cette grandeur énergétique (H) en exécutant les étapes suivantes:

   b1) on détermine un paramètre (CHG) représentatif d'un changement imminent de demande de couple au niveau des roues,
   b2) on détermine un facteur correctif (COR) de ladite grandeur énergétique (H), en fonction dudit paramètre (CHG) représentatif d'un changement imminent de demande de couple,
   b3) on détermine une grandeur énergétique corrigée (HCOR) égale à la somme de ladite grandeur énergétique (H) et dudit facteur correctif (COR),
   b4) on sélectionne le mode de transmission (Hyb1, ZEV1) pour minimiser ladite grandeur énergétique corrigée (HCOR), **caractérisé en ce que**, lors de l'étape b2), ledit facteur correctif (COR) est également déterminé en fonction du mode de transmission en cours d'utilisation.

2. Procédé de gestion de l'énergie selon la revendication 1, selon lequel, à l'étape a), on détermine, pour chaque mode de transmission (Hyb1, ZEV1) une valeur initiale de ladite grandeur énergétique (H) représentative de la consommation énergétique du groupe motopropulseur ; à l'étape b2), on détermine, pour chaque mode de transmission (Hyb1, ZEV1), une valeur dudit facteur correctif (COR) associée à ce mode de transmission ; à l'étape b3), on détermine, pour chaque mode de transmission (Hyb1, ZEV1), une valeur finale de ladite grandeur énergétique corrigée (HCOR) associée à ce même mode de transmission et à l'étape b4), on sélectionne le mode de transmission (Hyb1, ZEV1) présentant la valeur finale de la grandeur énergétique corrigée (HCOR) associée à ce mode de transmission la plus faible.

3. Procédé selon l'une des revendications 1 et 2, selon lequel chaque mode de transmission (Hyb1, ZEV1) est associé à un rapport de démultiplication et/ou à une répartition de couple entre le moteur thermique et le moteur électrique.

4. Procédé selon l'une des revendications 1 à 3, selon lequel, lesdits modes de transmission (Hyb1, ZEV) comprenant au moins un mode de transmission hybride (Hyb1) selon lequel le moteur thermique et le moteur électrique sont tous deux couplés aux roues du véhicule (1), et un mode de transmission tout électrique (ZEV1) selon lequel le moteur électrique seul est couplé aux roues du véhicule (1),
lorsque le mode de transmission en cours d'utilisation est le mode de transmission tout électrique (ZEV1) et que ledit paramètre (CHG) déterminé à l'étape b1) est représentatif d'une diminution imminente de demande de couple, alors, à l'étape b2), ledit facteur correctif (COR) est déterminé de manière à présenter une valeur plus grande pour le mode de transmission hybride (Hyb1) que pour le mode de transmission tout électrique (ZEV1).

5. Procédé selon l'une des revendications 1 à 4, selon lequel, lesdits modes de transmission comprenant au moins un mode de transmission hybride (Hyb1) selon lequel le moteur thermique et le moteur électrique sont tous deux couplés aux roues du véhicule (1), et un mode de transmission tout électrique (ZEV1) selon lequel le moteur électrique seul est couplé aux roues du véhicule (1),
lorsque le mode de transmission en cours d'utilisation est le mode de transmission hybride (Hyb1) et que ledit paramètre déterminé à l'étape b1) est représentatif d'une augmentation imminente de demande de couple, alors, à l'étape b2), ledit facteur correctif (COR) est déterminé de manière à présenter une valeur plus grande pour le mode de transmission tout électrique (ZEV1) que pour le mode de transmission hybride (Hyb1).

6. Procédé selon l'une des revendications 1 à 5, selon lequel ledit facteur correctif (COR) est proportionnel à ladite grandeur énergétique (H).

7. Procédé selon l'une des revendications 1 à 6, selon lequel, le véhicule (1) comprenant en outre un dispositif de géolocalisation adapté à fournir une information sur la position du véhicule et des données cartographiques numérisées, à l'étape b1), ledit paramètre CHG représentatif d'un changement imminent de demande de couple est déterminé en fonction de ladite information sur la position du véhicule et desdites données cartographiques numérisées.

8. Procédé selon l'une des revendications 1 à 7, selon lequel, à l'étape b1), ledit paramètre (CHG) représentatif d'un changement imminent de demande de couple est déterminé en outre en fonction d'au moins un signal représentatif des conditions de fonctionnement du véhicule (1).

9. Procédé selon la revendication 8, selon lequel ledit signal représentatif des conditions de fonctionnement du véhicule comprend au moins l'un des signaux suivants :

   - un signal représentatif de la vitesse (V) du véhicule (1),
   - un signal représentatif de l'état des clignotants du véhicule (1),
   - un signal représentatif de l'état activé ou désactivé d'un régulateur de vitesse du véhicule (1).

## Patentansprüche

1. Verfahren zur Verwaltung der Energie in einem Hybridkraftfahrzeug (1), das eine Antriebseinheit enthält, die einen Verbrennungsmotor und einen Elektromotor aufweist, die geeignet sind, mit Rädern des Fahrzeugs (1) durch eine Antriebsvorrichtung gemäß mindestens zwei Antriebsmodi (Hyb1, ZEV1) gekoppelt zu werden, von denen einer im Einsatz ist, gemäß dem

   a) eine für den Energieverbrauch der Antriebseinheit repräsentative Energiegröße (H) bestimmt wird, und
   b) einer der Antriebsmodi (Hyb1, ZEV1) abhängig von dieser Energiegröße (H) ausgewählt wird, indem die folgenden Schritte ausgeführt werden:

      b1) es wird ein für eine für eine bevorstehende Änderung der Drehmomentanforderung im Bereich der Räder repräsentativer Parameter (CHG) bestimmt,
      b2) es wird ein Korrekturfaktor (COR) der Energiegröße (H) abhängig vom für eine bevorstehende Änderung der Drehmomentanforderung im Bereich der Räder repräsentativen Parameter (CHG) bestimmt,
      b3) es wird eine korrigierte Energiegröße (HCOR) gleich der Summe der Energiegröße (H) und des Korrekturfaktors (COR) bestimmt,
      b4) der Antriebsmodus (Hyb1, ZEV1) wird ausgewählt, um die korrigierte Energiegröße (HCOR) zu minimieren, **dadurch gekennzeichnet, dass** im Schritt b2) der Korrekturfaktor (COR) ebenfalls abhängig vom im Einsatz befindlichen Antriebsmodus bestimmt wird.

2. Verfahren zur Verwaltung der Energie nach Anspruch 1, wobei im Schritt a) für jeden Antriebsmodus (Hyb1, ZEV1) ein Anfangswert der für den Energieverbrauch der Antriebseinheit repräsentativen Energiegröße (H) bestimmt wird; im Schritt b2) für jeden Antriebsmodus (Hyb1, ZEV1) ein diesem Antriebsmodus zugeordneter Wert des Korrekturfaktors (COR) bestimmt wird; im Schritt b3) für jeden Antriebsmodus (Hyb1, ZEV1) ein diesem gleichen Antriebsmodus zugeordneter Endwert der korrigierten Energiegröße (HCOR) bestimmt wird, und im Schritt b4) der Antriebsmodus (Hyb1, ZEV1) ausgewählt wird, der den schwächsten diesem Antriebsmodus zugeordneten Endwert der korrigierten Energiegröße (HCOR) aufweist.

3. Verfahren nach einem der Ansprüche 1 und 2, wobei jeder Antriebsmodus (Hyb1, ZEV1) einem Übersetzungsverhältnis und/oder einer Drehmomentverteilung zwischen dem Verbrennungsmotor und dem Elektromotor zugeordnet ist.

4. Verfahren nach einem der Ansprüche 1 bis 3, wobei, da die Antriebsmodi (Hyb1, ZEV) mindestens einen hybriden Antriebsmodus (Hyb1), bei dem der Verbrennungsmotor und der Elektromotor beide mit den Rädern des Fahrzeugs (1) gekoppelt sind, und einen vollelektrischen Antriebsmodus (ZEV1) enthalten, bei dem nur der Elektromotor mit den Rädern des Fahrzeugs (1) gekoppelt ist,
wenn der im Einsatz befindliche Antriebsmodus der vollelektrische Antriebsmodus (ZEV1) und der im Schritt b1) bestimmte Parameter (CHG) für eine bevorstehende Verringerung der Drehmomentanforderung repräsentativ ist, dann im im Schritt b2) der Korrekturfaktor (COR) so bestimmt wird, dass er einen höheren Wert für den hybriden Antriebsmodus (Hyb1) als für den vollelektrischen Antriebsmodus (ZEV1) aufweist.

5. Verfahren nach einem der Ansprüche 1 bis 4, wobei, da die Antriebsmodi mindestens einen hybriden Antriebsmodus (Hyb1), bei dem der Verbrennungsmotor und der Elektromotor beide mit den Rädern des Fahrzeugs (1) gekoppelt sind, und einen vollelektrischen Antriebsmodus (ZEV1) enthalten, bei dem nur der Elektromotor mit den Rädern des Fahrzeugs (1) gekoppelt ist,
wenn der im Einsatz befindliche Antriebsmodus der hybride Antriebsmodus (Hyb1) und der im Schritt b1) bestimmte Parameter für eine bevorstehende Erhöhung der Drehmomentanforderung repräsentativ ist, dann im Schritt b2) der Korrekturfaktor (COR) so bestimmt wird, dass er einen höheren Wert für den vollelektrischen Antriebsmodus (ZEV1) als für den hybriden Antriebsmodus (Hyb1) aufweist.

6. Verfahren nach einem der Ansprüche 1 bis 5, wobei der Korrekturfaktor (COR) proportional zur Energiegröße (H) ist.

7. Verfahren nach einem der Ansprüche 1 bis 6, wobei, da das Fahrzeug (1) außerdem eine Geolokalisierungsvorrichtung, die geeignet ist, eine Information über die Position des Fahrzeugs zu liefern, und digitalisierte Kartographiedaten enthält, im Schritt b1) der für eine bevorstehende Änderung einer Drehmomentanforderung repräsentative Parameter CHG abhängig von der Information über die Position des Fahrzeugs und von den digitalisierten Kartographiedaten bestimmt wird.

8. Verfahren nach einem der Ansprüche 1 bis 7, wobei im Schritt b1) der für eine bevorstehende Änderung einer Drehmomentanforderung repräsentative Parameter (CHG) außerdem abhängig von mindestens einem für die Betriebsbedingungen des Fahrzeugs (1) repräsentativen Signal bestimmt wird.

9. Verfahren nach Anspruch 8, wobei das für die Betriebsbedingungen des Fahrzeugs repräsentative Signal mindestens eines der folgenden Signale enthält:

   - ein für die Geschwindigkeit (V) des Fahrzeugs (1) repräsentatives Signal,
   - ein für den Zustand der Blinker des Fahrzeugs (1) repräsentatives Signal,
   - ein für den aktivierten oder deaktivierten Zustand eines Drehzahlreglers des Fahrzeugs (1) repräsentatives Signal.

**Claims**

1. Method for energy management in a hybrid motor vehicle (1) comprising a power plant that includes a heat engine and an electric motor suitable for being coupled with wheels of the vehicle (1) via a transmission device according to at least two transmission modes (Hyb1, ZEV1), one of which is currently in use, wherein

   a) a quantity of energy (H) is determined which represents the energy consumption of the power plant, and
   b) one of said transmission modes (Hyb1, ZEV1) is selected according to this quantity of energy (H) by executing the following steps:

b1) a parameter (CHG) is determined which represents an imminent change in torque demand at the wheels,
b2) a correction factor (COR) of said quantity of energy (H) is determined according to said parameter (CHG) which represents an imminent change in torque demand,
b3) a corrected quantity of energy (HCOR) is determined which is equal to the sum of said quantity of energy (H) plus said correction factor (COR),
b4) the transmission mode (Hyb1, ZEV1) is selected in order to minimize said corrected quantity of energy (HCOR),

**characterized in that**, in the course of step b2), said correction factor (COR) is likewise determined according to the transmission mode currently in use.

2. Method for energy management according to Claim 1, wherein at step a), an initial value of said quantity of energy (H) is determined for each transmission mode (Hyb1, ZEV1), this quantity representing the energy consumption of the power plant; at step b2), a value of said correction factor (COR) associated with this transmission mode is determined for each transmission mode (Hyb1, ZEV1); at step b3), a final value of said corrected quantity of energy (HCOR) associated with this same transmission mode is determined for each transmission mode (Hyb1, ZEV1) and at step b4), the transmission mode (Hyb1, ZEV1) is selected which has the lowest final value of the corrected quantity of energy (HCOR) associated with this transmission mode.

3. Method according to either of Claims 1 and 2, wherein each transmission mode (Hyb1, ZEV1) is associated with a gear ratio and/or with a division of torque between the heat engine and the electric motor.

4. Method according to one of Claims 1 to 3, wherein, said transmission modes (Hyb1, ZEV1) comprising at least one hybrid transmission mode (Hyb1) wherein the heat engine and the electric motor are both coupled with the wheels of the vehicle (1), and an all electric transmission mode (ZEV1) wherein the electric motor alone is coupled with the wheels of the vehicle (1),
when the transmission mode currently in use is the all electric transmission mode (ZEV1) and when said parameter (CHG) determined at step b1) represents an imminent decrease in torque demand, then, at step b2), said correction factor (COR) is determined so as to have a higher value for the hybrid transmission mode (Hyb1) than for the all electric transmission mode (ZEV1).

5. Method according to one of Claims 1 to 4, wherein, said transmission modes comprising at least one hybrid transmission mode (Hyb1) wherein the heat engine and the electric motor are both coupled with the wheels of the vehicle (1), and an all electric transmission mode (ZEV1) wherein the electric motor alone is coupled with the wheels of the vehicle (1),
when the transmission mode currently in use is the hybrid transmission mode (Hyb1) and when said parameter determined at step b1) represents an imminent increase in torque demand, then, at step b2), said correction factor (COR) is determined so as to have a higher value for the all electric transmission mode (ZEV1) than for the hybrid transmission mode (Hyb1).

6. Method according to one of Claims 1 to 5, wherein said correction factor (COR) is proportional to said quantity of energy (H).

7. Method according to one of Claims 1 to 6, wherein, the vehicle (1) furthermore comprising a global positioning system suitable for supplying information on the position of the vehicle and digitized cartographic data, at step b1), said parameter CHG which represents an imminent change in torque demand is determined according to said information on the position of the vehicle and said digitized cartographic data.

8. Method according to one of Claims 1 to 7, wherein, at step b1), said parameter (CHG) which represents an imminent change in torque demand is furthermore determined according to at least one signal which represents the functioning conditions of the vehicle (1).

9. Method according to Claim 8, wherein said signal which represents the functioning conditions of the vehicle comprises at least one of the following signals:

- a signal which represents the speed (V) of the vehicle (1),

- a signal which represents the state of the turn signal lights of the vehicle (1),
- a signal which represents the activated or deactivated state of a speed regulator of the vehicle (1) .

Fig.1

Fig.2

Fig.3

# Fig.4

# Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3014062

- FR 2935123